# EUROPÄISCHE PATENTSCHRIFT

(11) **EP 3 033 545 B1**
(45) Veröffentlichungstag und Bekanntmachung des Hinweises auf die Patenterteilung: **04.12.2019**
(21) Anmeldenummer: 14738742.7
(22) Anmeldetag: 10.07.2014
(51) Int. Cl.: F16H 1/16, F16H 55/22

(54) **GETRIEBE MIT EINEM RITZEL UND EINEM RAD**
TRANSMISSION WITH A PINION AND A GEAR
ENGRENAGE COMPORTANT UN PIGNON ET UNE ROUE DENTÉE

(30) Priorität: 14.08.2013 DE 102013013470
(43) Veröffentlichungstag der Anmeldung: 22.06.2016
(73) Patentinhaber: SEW-EURODRIVE GmbH & Co. KG, 76646 Bruchsal (DE)
(72) Erfinder: HERMES, Jörg, 76646 Bruchsal (DE); SIEVERS, Björn, 69115 Heidelberg (DE); HERBERGER, Michael Josef, 68789 St. Leon-Rot (DE)
(86) Internationale Anmeldenummer: PCT/EP2014/001897
(87) Internationale Veröffentlichungsnummer: WO 2015/022042

(56) Entgegenhaltungen:
- EP-A1- 2 406 522
- US-A- 2 908 187

## Beschreibung

Die Erfindung betrifft ein Getriebe mit einem Ritzel und einem Rad.

Aus der EP 2 406 522 B1 ist bekannt, ein Ritzel verschiedenartigen Verzahnungsbereichen auszustatten und mit einem Rad in Eingriff zu bringen, dessen Achse windschief, also beabstandet und nicht senkrecht, zur Ritzelachse ausgerichtet ist.

**Aus der** US 2 908 187 A **ist ein Getriebe mit einem Ritzel und einem Rad bekannt, wobei das Rad auf einer seiner Stirnseiten zwei voneinander beabstandete Verzahnungsbereiche aufweist, wobei die Verzahnung des Ritzels mit den Verzahnungsberiechen kämmt und wobei die Ritzelachse senkrecht und beabstandet ist von der Radachse.**

Der Erfindung liegt daher die Aufgabe zugrunde, ein Getriebe mit einem Ritzel und einem Rad weiterzubilden, wobei ein hohes Drehmoment in einem kleinen Bauvolumen übertragbar sein soll.

Erfindungsgemäß wird die Aufgabe bei dem Getriebe mit einem Ritzel und einem Rad nach den in Anspruch 1 angegebenen Merkmalen gelöst.

Wichtige Merkmale der Erfindung bei dem Getriebe mit einem Ritzel und einem Rad sind, dass das Rad, insbesondere auf einer seiner Stirnseiten, zwei voneinander beabstandete Verzahnungsbereiche aufweist,
wobei die insbesondere ununterbrochene Verzahnung, insbesondere wobei die Verzahnung zusammenhängend ist, also ununterbrochen durchgehend, des Ritzels mit den Verzahnungsbereichen kämmt,
**wobei** die Ritzelachse senkrecht und beabstandet ist von der Radachse, insbesondere also sich Ritzelachse und Radachse rechtwinklig kreuzen.

Von Vorteil ist dabei, dass die Verzahnung des Ritzels einfach und kostengünstig ausführbar ist, insbesondere weil sie in einem einzigen Arbeitsgang fertigbar ist. Außerdem ist das Ritzel einfach zum Rad ausrichtbar und mittels Lagern im Gehäuse lagerbar. Denn ein rechter Winkel der Ritzelachse zur Radachse hin ist einfach bei der Herstellung realisierbar.

**Erfindungsgemäß** ist das Ritzel zylindrisch, insbesondere also nicht konisch, insbesondere wobei das Ritzel eine Zylinderschneckenwelle ist, insbesondere also ein Z_{A}, Z_{I} oder Z_{K}-Profil aufweist. **Insbesondere** ist das Verzahnungsprofil der Verzahnung des Ritzels überall gleich **und** ist in Ritzelachsrichtung unveränderlich **und** in beiden Einzeleingriffsgebieten dasselbe. Von Vorteil ist dabei, dass eine einfach herstellbare Verzahnung einsetzbar ist.

Bei einer vorteilhaften Ausgestaltung ist die Verzahnung des Ritzels durchgehend, insbesondere also in Ritzelachsrichtung ununterbrochen. Von Vorteil ist dabei, dass eine besonders einfache Herstellung ausführbar ist.

Bei einer vorteilhaften Ausgestaltung ist die Verzahnung des Ritzels eine Zylinderschneckenverzahnung. Von Vorteil ist dabei, dass die Herstellung des Ritzels sehr einfach ist, weil nur ein einziges Flankenprofil, also Zahnprofil, beispielsweise Z_{A}-Profil, Z_{I}-Profil oder Z_{K}-Profil.

Bei einer vorteilhaften Ausgestaltung überlappt der von dem ersten Verzahnungsbereich überdeckte axiale Bereich, insbesondere also Radachsbereich, mit dem von dem zweiten Verzahnungsbereich überdeckten axialen Bereich, insbesondere also Radachsbereich. Von Vorteil ist dabei, dass die Ritzelachse senkrecht ausrichtbar ist zur Radachse.

Bei einer vorteilhaften Ausgestaltung ist ein erster Verzahnungsabschnitt als Planverzahnung, insbesondere Spiroplanverzahnung, ausgeführt,
insbesondere wobei die Zähne des Verzahnungsabschnitts am Rad bogenförmig ausgeführt sind, also mit zunehmendem Radialabstand der jeweilige Zahns sich zunehmend in Umfangsrichtung, insbesondere mit zunehmendem Umfangswinkel, erstreckt. Von Vorteil ist dabei, dass ein hohes Drehmoment in kompakter Weise mit hohem Wirkungsgrad übertragbar ist.

Bei einer vorteilhaften Ausgestaltung ist der zweite Verzahnungsabschnitt eine Schneckenradverzahnung, insbesondere eine globoidförmige, globoidale oder halbgloboidale Schneckenradverzahnung. Von Vorteil ist dabei, dass eine einfache Herstellung der Schneckenradverzahnung ausführbar ist.

Bei einer vorteilhaften Ausgestaltung ist zwischen den beiden Verzahnungsabschnitten am Rad eine ringförmige Vertiefung vorgesehen. Von Vorteil ist dabei, dass eine einfache Fertigung ausführbar ist, da die beiden Verzahnungsabschnitte somit voneinander beabstandet sind. Einem Verschnitt beim Verzahnungsfräsen ist somit vorbeugbar.

Bei einer vorteilhaften Ausgestaltung sind die beiden Verzahnungsabschnitte radial voneinander beabstandet. Von Vorteil ist dabei, dass das Ritzel an zwei voneinander in Ritzelachsrichtung beabstandeten Bereichen mit dem Rad in Eingriff steht.

Bei einer vorteilhaften Ausgestaltung ist das Ritzel beidseitig gelagert. Von Vorteil ist dabei, dass somit die Querkräfte ableitbar sind.

Weitere Vorteile ergeben sich aus den Unteransprüchen.

Die Erfindung wird nun anhand von Abbildungen näher erläutert:

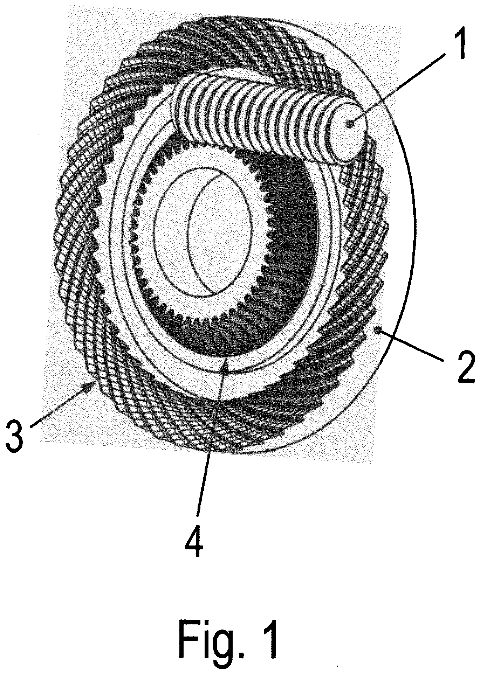

In der Figur 1 ist eine Schrägansicht auf eine erfindungsgemäßes Getriebestufe in einer ersten Blickrichtung gezeigt.

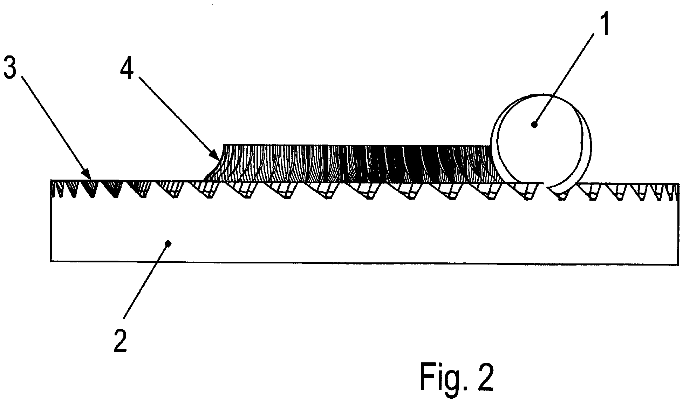

In der Figur 2 ist eine zugehörige Seitenansicht gezeigt.

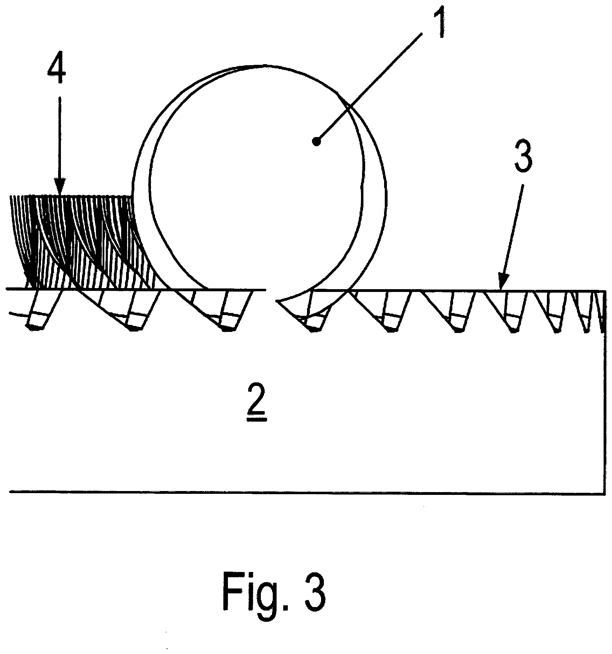

In der Figur 3 ist ein zugehöriger vergrößerter Ausschnitt gezeigt.

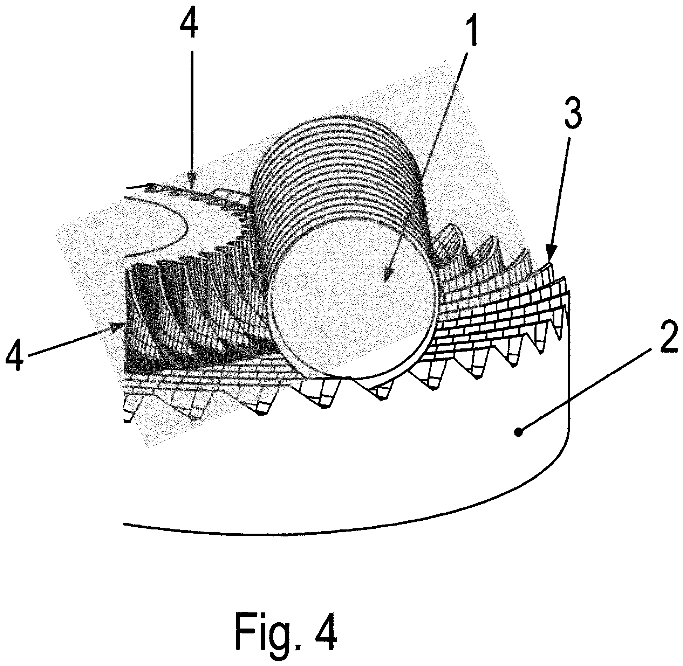

In der Figur 4 ist eine Schrägansicht auf die erfindungsgemäße Getriebestufe in einer weiteren Blickrichtung gezeigt.

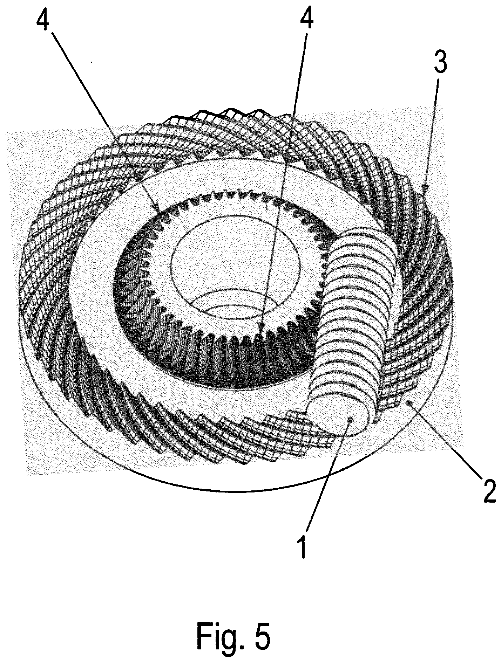

In der Figur 5 ist eine Schrägansicht auf die erfindungsgemäße Getriebestufe in einer weiteren Blickrichtung gezeigt.

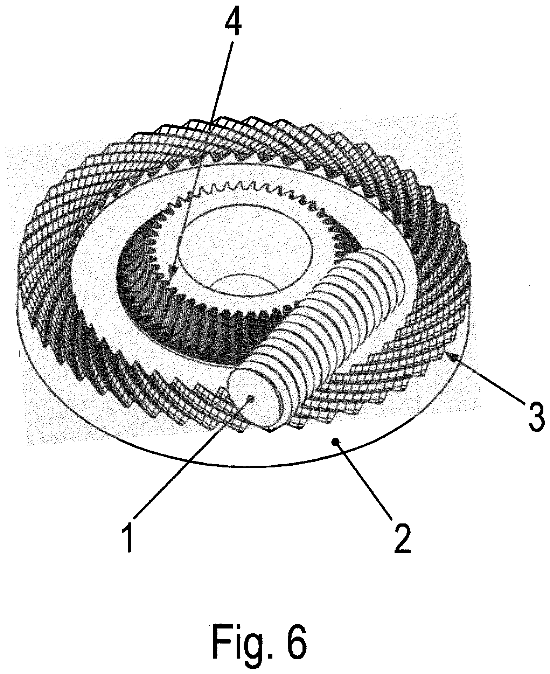

In der Figur 6 ist eine Schrägansicht auf die erfindungsgemäße Getriebestufe in einer weiteren Blickrichtung gezeigt.

Wie in den Figuren gezeigt, weist ein erfindungsgemäßes Getriebe eine Getriebestufe auf, bei welcher ein Ritzel 1 mit zwei Verzahnungsabschnitten eines Rades kämmt.

Dabei ist das Ritzel als Zylinderschneckenwelle ausgeführt, insbesondere weist hierzu das Ritzel eine Schneckenverzahnung auf, beispielhaft also mit Z_{A}, Z_{I} oder Z_{K}-Profil.

Die gesamte Schneckenverzahnung des Ritzels 1 ist dabei durchgehend gleichartig, weist also überall dieselben die Verzahnung eineindeutig kennzeichnenden Parameter auf. Insbesondere ist der Kopfkreisdurchmesser und der Fußkreisdurchmesser unabhängig von der in Ritzelachsenrichtung gesehenen axialen Position. Das Profil, insbesondere also das Stirnschnittprofil oder Querschnittsprofil, der Verzahnung ist also spiralsymmetrisch invariant, wobei die Spirale dem Steigungswinkel der Zylinderschneckenwelle, insbesondere also dem Schrägungswinkel der Schneckenverzahnung des Ritzels 1, entspricht.

Das Ritzel 1 kämmt mit dem Rad 2. Die Ritzelachse und die Radachse sind senkrecht zueinander ausgerichtet, wobei sie voneinander beabstandet sind mit einem nicht verschwindendem Abstandswert.
Das Rad 2 weist zwei verschiedenartige Verzahnungsabschnitte auf, wobei das Ritzel mit beiden Verzahnungsabschnitten kämmt, also im Eingriff steht.

Ein erster Verzahnungsabschnitt ist als Planverzahnung 3, insbesondere Spiroplanverzahnung, ausgeführt. Die Zähne verlaufen dabei bogenförmig, also mit zunehmender radialer Erstreckung des jeweiligen Zahns erstreckt dieser sich zunehmend in Umfangsrichtung, insbesondere mit zunehmendem Umfangswinkel.

Der zweite Verzahnungsabschnitt 4, insbesondere eine globoidförmige und/oder halbgloboidale Schneckenradverzahnung, ist keine Planverzahnung sondern eine Schneckenradverzahnung.

In axialer Richtung, also in Radachsrichtung, überlappt der von dem ersten Verzahnungsabschnitt überdeckte axiale Bereich mit dem von dem zweiten Verzahnungsabschnitt überdeckten axialen Bereich.

Die Zähne der Schneckenradverzahnung erstrecken sich nur in axialer und radialer Richtung nicht aber in Umfangsrichtung.

Das Ritzel kämmt also in einem ersten Bereich seiner Verzahnung mit der Planverzahnung 3 und in einem davon in Ritzelachsrichtung beabstandeten Bereich seiner Verzahnung mit der Schneckenradverzahnung. Die beiden Eingriffsbereiche überlappen in Umfangsrichtung der Ritzelachse. Anders ausgedrückt, überlappen die in Ritzelachsrichtung in eine Ebene, deren Normalenrichtung die Ritzelachsrichtung ist, projizierten Eingriffs-Bereiche.

Durch die Berührung zwischen Ritzel und Rad in zwei Bereichen ergibt sich ein längeres Gesamteingriffsgebiet, weil die Berührlinienlängen der beiden Eingriffsgebiete der beiden Bereiche, also des Berührbereichs mit dem ersten und des Berührbereichs mit dem zweiten Verzahnungsabschnitt, sich addieren.

Das Ritzel ist axial beidseitig gelagert, so dass die Durchbiegung reduziert ist und/oder eine erhöhte Stabilität vorliegt und somit hohe Querkräfte aufnehmbar sind.

Insgesamt ist mit dem erfindungsgemäßen Getriebe eine hohe Effizienz und ein hoher Leistungsdurchsatz erreichbar.

### Bezugszeichenliste

- 1: Ritzel
- 2: Rad
- 3: Planverzahnung, insbesondere Spiroplanverzahnung
- 4: Schneckenradverzahnung

## Patentansprüche

1. Getriebe mit einem Ritzel (1) und einem Rad (2),
wobei das Rad (2), insbesondere auf einer seiner Stirnseiten, zwei voneinander beabstandete Verzahnungsbereiche aufweist,
wobei die Verzahnung, insbesondere wobei die Verzahnung zusammenhängend ist, also ununterbrochen durchgehend, des Ritzels (1) mit den Verzahnungsbereichen des Rads (2) kämmt,
**wobei** die Ritzelachse beabstandet ist von der Radachse,
wobei **das Ritzel (1) zylindrisch, insbesondere also nicht konisch, ist, insbesondere ein Z_{A}, Z_{I} oder Z_{K}-Profil** aufweist,
**dadurch gekennzeichnet, dass**
die Ritzelachse und die Radachse senkrecht zueinander ausgerichtet sind.

2. Getriebe nach Anspruch 1,
**dadurch gekennzeichnet, dass**
**das Ritzel (1) eine Zylinderschneckenradwelle ist.**

3. Getriebe nach mindestens einem der vorangegangenen Ansprüche,
**dadurch gekennzeichnet, dass**
**das Verzahnungsprofil der Verzahnung des Ritzels (1) überall gleich ist.**

4. Getriebe nach mindestens einem der vorangegangenen Ansprüche,
**dadurch gekennzeichnet, dass**
**das Verzahnungsprofil der Verzahnung des Ritzels (1) in Ritzelachsrichtung unveränderlich ist und in beiden Einzeleingriffsgebieten dasselbe ist.**

5. Getriebe nach mindestens einem der vorangegangenen Ansprüche,
**dadurch gekennzeichnet, dass**
die Verzahnung des Ritzels (1) durchgehend ist, insbesondere also in Ritzelachsrichtung ununterbrochen.

6. Getriebe nach mindestens einem der vorangegangenen Ansprüche,
**dadurch gekennzeichnet, dass**
die Verzahnung des Ritzels (1) eine Zylinderschneckenverzahnung ist, insbesondere mit einem Z_{A}, Z_{I} oder Z_{K}-Profil.

7. Getriebe nach mindestens einem der vorangegangenen Ansprüche,
**dadurch gekennzeichnet, dass**
der von dem ersten Verzahnungsbereich überdeckte axiale Bereich, insbesondere also Radachsbereich, überlappt mit dem von dem zweiten Verzahnungsbereich überdeckten axialen Bereich, insbesondere also Radachsbereich.

8. Getriebe nach mindestens einem der vorangegangenen Ansprüche,
**dadurch gekennzeichnet, dass**
Ein erster Verzahnungsabschnitt als Planverzahnung (3), insbesondere Spiroplanverzahnung, ausgeführt ist,
insbesondere wobei die Zähne des Verzahnungsabschnitts am Rad (2) bogenförmig ausgeführt sind, also mit zunehmendem Radialabstand der jeweilige Zahns sich zunehmend in Umfangsrichtung, insbesondere mit zunehmendem Umfangswinkel, erstreckt.

9. Getriebe nach mindestens einem der vorangegangenen Ansprüche,
**dadurch gekennzeichnet, dass**
der zweite Verzahnungsabschnitt (4) eine Schneckenradverzahnung (4) ist, insbesondere eine globoidförmige, globoidale und/oder halbgloboidale Schneckenradverzahnung (4) ist.

10. Getriebe nach mindestens einem der vorangegangenen Ansprüche,
**dadurch gekennzeichnet, dass**
zwischen den beiden Verzahnungsabschnitten am Rad (2) eine ringförmige Vertiefung vorgesehen ist
und/oder dass die beiden Verzahnungsabschnitt radial voneinander beabstandet sind.

11. Getriebe nach mindestens einem der vorangegangenen Ansprüche,
**dadurch gekennzeichnet, dass**
das Ritzel (1) beidseitig gelagert ist.

## Claims

1. A gear unit with a pinion (1) and a wheel (2),
wherein the wheel (2), in particular on one of its end faces, has two gearing regions spaced apart from each other,
wherein the gearing, in particular wherein the gearing is cohesive, i.e. uninterrupted and continuous, of the pinion (1) meshes with the gearing regions of the wheel (2),
wherein the pinion axis is spaced apart from the wheel axis,
wherein
the pinion (1) is cylindrical, in particular therefore not conical, in particular has a Z_{A}, Z_{I} or Z_{K} profile,
**characterised in that**
the pinion axis and the wheel axis are oriented perpendicularly to one another.

2. A gear unit according to Claim 1,
**characterised in that**
the pinion (1) is a cylindrical worm wheel shaft.

3. A gear unit according to at least one of the preceding claims,
**characterised in that**
the gearing profile of the gearing of the pinion (1) is the same everywhere.

4. A gear unit according to at least one of the preceding claims,
**characterised in that**
the gearing profile of the gearing of the pinion (1) is unchanging in the direction of the pinion axis and is the same in both single-tooth contact areas.

5. A gear unit according to at least one of the preceding claims,
**characterised in that**
the gearing of the pinion (1) is continuous, in particular therefore uninterrupted in the direction of the pinion axis.

6. A gear unit according to at least one of the preceding claims,
**characterised in that**
the gearing of the pinion (1) is cylindrical worm gearing, in particular with a Z_{A}, Z_{I} or Z_{K} profile.

7. A gear unit according to at least one of the preceding claims,
**characterised in that**
the axial region covered by the first gearing region, in particular therefore wheel axis region, overlaps with the axial region covered by the second gearing region, in particular therefore wheel axis region.

8. A gear unit according to at least one of the preceding claims,
**characterised in that**
a first gearing portion is embodied as crown gearing (3), in particular Spiroplan gearing, in particular wherein the teeth of the gearing portion-are embodied in arcuate manner on the wheel (2), i.e. with increasing radial distance of the respective tooth extends increasingly in the peripheral direction, in particular with increasing angle at circumference.

9. A gear unit according to at least one of the preceding claims,
**characterised in that**
the second gearing portion (4) is worm wheel gearing (4), in particular globoid-shaped, globoid and/or semigloboid worm wheel gearing (4).

10. A gear unit according to at least one of the preceding claims,
**characterised in that**
an annular depression is provided on the wheel (2) between the two gearing portions and/or **in that** the two gearing portion are radially spaced apart from one another.

11. A gear unit according to at least one of the preceding claims,
**characterised in that**
the pinion (1) is mounted in bearings on both sides.

## Revendications

1. Engrenage comportant un pignon (1) et une roue dentée (2),
sachant que la roue dentée (2) présente, en particulier sur une de ses faces frontales, deux zones de denture distantes l'une de l'autre,
sachant que la denture du pignon (1), sachant en particulier que cette denture est continue, donc est ininterrompue d'une extrémité à l'autre, engrène avec les zones de denture de la roue dentée (2).
sachant que l'axe du pignon est distant de l'axe de la roue dentée,
sachant que le pignon (1) est cylindrique, en particulier donc n'est pas conique, en particulier présente un profil Z_{A}, Z_{I} ou Z_{K},
**caractérisé en ce que** l'axe du pignon et l'axe de la roue dentée sont orientés perpendiculairement l'un par rapport à l'autre.

2. Engrenage selon la revendication 1, **caractérisé en ce que** le pignon (1) est un arbre de roue-vis cylindrique.

3. Engrenage selon au moins une des revendications précédentes, **caractérisé en ce que** le profil de denture de la denture du pignon (1) est partout identique.

4. Engrenage selon au moins une des revendications précédentes, **caractérisé en ce que** le profil de denture de la denture du pignon (1) est invariable dans la direction de l'axe du pignon et est le même dans les deux zones individuelles d'engrènement.

5. Engrenage selon au moins une des revendications précédentes, **caractérisé en ce que** la denture du pignon (1) est continue, en particulier donc est ininterrompue dans la direction de l'axe du pignon.

6. Engrenage selon au moins une des revendications précédentes, **caractérisé en ce que** la denture du pignon (1) est une denture de vis sans fin cylindrique, en particulier avec un profil Z_{A}, Z_{I} ou Z_{K}.

7. Engrenage selon au moins une des revendications précédentes, **caractérisé en ce que** la zone axiale couverte par la première zone de denture, en particulier donc la zone de l'axe de la roue dentée, se chevauche avec la zone axiale couverte par la deuxième zone de denture, en particulier donc la zone de l'axe de la roue dentée.

8. Engrenage selon au moins une des revendications précédentes, **caractérisé en ce qu'**une première partie de denture est réalisée sous forme de denture plane (3), en particulier de denture spiro-plane,
sachant en particulier que les dents de la partie de denture sur la roue dentée (2) sont réalisées arquées, donc la denture respective présente une étendue croissante en direction circonférentielle avec l'augmentation de sa distance radiale, en particulier avec augmentation de l'angle inscrit.

9. Engrenage selon au moins une des revendications précédentes, **caractérisé en ce que** la deuxième partie de denture (4) est une denture de roue-vis (4), en particulier est une denture de roue-vis (4) globoïde, globoïdale et/ou semi-globoïdale.

10. Engrenage selon au moins une des revendications précédentes, **caractérisé en ce qu'**un renfoncement annulaire est prévu sur la roue dentée (2) entre les deux parties de denture,
et/ou **en ce que** les deux parties de denture sont radialement distantes l'une de l'autre.

11. Engrenage selon au moins une des revendications précédentes, **caractérisé en ce que** le pignon (1) est supporté de part et d'autre.
